# EUROPEAN PATENT APPLICATION

(11) **EP 4 242 143 A1**
(43) Date of publication of application: **13.09.2023**
(21) Application number: 22382232.1
(22) Date of filing: 11.03.2022
(51) Int. Cl.: B65G 47/84, B65G 47/32, B65B 35/24

(54) **METHOD FOR CONTROLLING A TRANSPORTING DEVICE AND TRANSPORTING DEVICE**

(71) Applicant: MULTIVAC Sepp Haggenmüller SE & Co. KG, 87787 Wolfertschwenden (DE)
(72) Inventor: Ortega Sanchez, Ismael, 08360 Barcelona (ES); Rosell, Borja, 08370 Calella (Barcelona) (ES)
(74) Representative: Grünecker Patent- und Rechtsanwälte PartG mbB

(57) **Abstract**

A method for controlling a transporting device (100) for transporting trays (130) to a tray sealing machine (180), the transporting device (100) comprising a control device (190), a first conveyor (101), a second conveyor (102), a sliding region (103) and a pushing device (140) arranged along the second conveyor (102) and the sliding region (103) and comprising at least two pushers (141, 142) extending transversally to a transport direction of the trays (130) in the transporting device (100), wherein the method comprises controlling, by a control device (190) of the transport device (100), the first conveyor (101) to move at a first speed (V1), controlling the second conveyor (102) to move at a second speed (V2) and controlling the pushing device (140) so that the pushers (141, 142) move along the transport direction of the second conveyor (102) and, in transport direction, a leading pusher (141) restricts movement of a tray (130) along at least a portion of the second conveyor (102) and a trailing pusher (142) moves the tray along at least a portion of the sliding region (103).

## Description

The present disclosure relates to a method for controlling a transporting device for transporting trays to a tray sealing machine according to claim 1 and a transporting device for transporting trays to a tray sealing machine according to independent claim 11.

### Prior Art

Transporting devices for transporting trays to a sealing machine are generally known. These comprise a transporting plane in which the trays are transported in a line along the transport direction of the trays. It is also known to transport the trays in several parallel lines arranged transverse to the transport direction of the trays. The transporting device usually comprises one or more conveyors. As the tray sealing machine requires the trays to be positioned at specific distances to each other so as to be reliably received in depressions in the sealing machine, fixed blocking bars between subsequent conveyors have been provided to stop movement of the trays in the transport direction, thereby achieving alignment of transversely arranged rows of trays and also adjusting the distance between subsequent trays.

These blocking bars, however, stop movement of the trays at least for a period of time, thus resulting in reduced throughput of the sealing machine.

Furthermore, in case the transporting device comprises a sliding region, it is known to use moveable pushers to move the trays along the sliding region.

While this allows for a speedy transport of the trays along the sliding region, these systems require previous accurate positioning of the trays so that they can be moved along the sliding region, likewise potentially leading to reduced throughput.

### Objective

Starting from the known prior art, it is an objective of the present disclosure to provide a method for controlling a transporting device for transporting trays to a tray sealing machine that achieves reliable positioning of the trays before transfer to the tray sealing machine and, at the same time, allows for high throughput.

### Solution

This objective is solved by the method for controlling a transporting device for transporting trays to a tray sealing machine according to independent claim 1 and a transporting device for transporting trays to a tray sealing machine according to independent claim 11. Preferred embodiments of the present disclosure are provided in the dependent claims.

The method according to the invention for controlling a transporting device for transporting trays to a tray sealing machine, the transporting device comprising a control device, a first conveyor, a second conveyor downstream the first conveyor, a sliding region downstream the second conveyor and a pushing device arranged along the second conveyor and the sliding region and comprising at least two pushers extending transversally to a transport direction of the trays in the transporting device, comprises controlling, by a control device of the transport device, the first conveyor to move at a first speed, controlling the second conveyor to move at a second speed and controlling the pushing device so that the pushers move along the transport direction of the second conveyor and, in transport direction, a leading pusher restricts movement of a tray along at least a portion of the second conveyor and a trailing pusher moves the tray along at least a portion of the sliding region.

The pushers may particularly be provided as push bars extending at least partially, preferably completely, over the transverse extension of the second conveyor.

Controlling the speed of the pushers so that one pusher restricts the movement of a tray along at least a portion of the second conveyor and a trailing pusher moves the tray along at least a portion of the sliding region means that subsequently following pushers border a tray transported between them. However, physical contact to either of the pushers is not required to be present over the whole transport. There can thus also be times during transport where the tray is not in contact with at least one or both of the pushers.

The restriction of the movement along at least a portion of the second conveyor comprises that the tray is in physical contact with the leading pusher so that it cannot move further than the leading pusher in the transport direction. The trailing pusher likewise gets into contact with the tray in the sliding region, thereby apply a force to the tray so as to move it along a portion of the sliding region.

As the movement of the pushers of the pushing device is precisely controlled and they extend transversely to the transport direction both in the second conveyor and in the sliding region, reliable positioning of the trays in the transport direction is ensured while not having to stop the movement of the trays in either of the second conveyor and the sliding region. Thereby, blocking means that stop the movement of the trays at least partially so as to achieve alignment of the trays are no longer necessary, thus increasing the achievable throughput of the transporting device.

In one embodiment, the second speed is smaller than the first speed and, optionally, a friction coefficient of the second conveyor with respect to the trays is smaller than a friction coefficient of the first conveyor with respect to the trays; or the second speed is larger than the first speed and, optionally, a friction coefficient of the second conveyor with respect to the trays is larger than a friction coefficient of the first conveyor with respect to the trays.

Depending on the relative arrangement of the first conveyor and the second conveyor and their speed relative to each other, this allows for reliably restricting the movement of the trays, thereby positioning them appropriately for transfer to the tray sealing machine. It is also advantageous if the friction coefficient of a second conveyor is smaller than that of the first conveyor with respect to the trays if the second speed is smaller than the first speed. Thereby, slippage can be avoided. The same holds for the case where the second speed is larger than the first speed where it is advantageous if the friction coefficient of the second conveyor with respect to the trays is larger than the friction coefficient of the first conveyor with respect to the trays. Thereby, the force moving the trays in the second conveyor that moves faster than the first conveyor is reliably transferred to the trays without slippage.

In one embodiment, the pushing device and the second conveyor are driven by a common drive means. The common drive means may, for example, be a common drive chain and/or a servomotor. The correct alignment of the movement of the pushing device, and particularly the pushers of the pushing device to the second conveyor, is thereby ensured.

Alternatively, the pushing device is driven by a first drive means and the second conveyor is driven by a second drive means independent from the first drive means. These drive means can be realized as independent drive chains or servomotors, for example. With this embodiment, it is possible to independently drive the pushing device so as to also take into account particular requirements regarding the transport of the trays within the sliding region.

It can further be provided that the control device controls the first drive means so that a speed of the pushers intermittently changes from a third speed to a fourth speed, wherein, optionally, the third speed and/or the fourth speed is smaller than the second speed. By this intermittent or cyclic change of the speed of the pushers, particular requirements regarding the restriction of the movement of the trays and thereby also restrictions regarding their relative distance to each other can be realized.

In a further embodiment, the pushing device is controlled by the control device so that a speed of the pushers is equal to the second speed or wherein the speed of the pushers is smaller than the first speed and different from the second speed.

This control of the pushing device, and particularly the movement of the pushers, can also allow for accounting for different first and second speeds of the first and second conveyors, respectively.

In one embodiment, a pushers acts as a trailing pusher for a first tray and as a leading pusher of a subsequent tray. The pusher thus obtains a "double"-functionality that advantageously reduces the number of pushers required while, at the same time, allowing for transport of trays in close proximity.

It can further be provided that trays are transported in at least two lines transverse to a transport direction of the trays in the transporting device. The throughput of the transporting device is thereby increased while still achieving reliable positioning of the trays.

In a more specific realization, the trays are transported in the first conveyor in subsequent, spaced apart groups, wherein trays within a group are not actively aligned in a direction transverse to the transport direction of the trays in the first conveyor. The restrictions for transporting the trays in the first conveyors are thereby reduced while the necessary alignment of the trays before transferring them to the tray sealing machine is still ensured.

Even further, a distance between subsequent groups of trays transported in the first conveyor can be smaller than the difference between a distance of two subsequent pushers and two times the extension of a tray in transport direction. This embodiment is particularly advantageous if the second speed is smaller than the first speed and results in reliable positioning of exactly one tray between two subsequent pushers.

In a further embodiment, the pushers are connected to a common drive chain. With this, the complexity for driving the pushers is reduced.

According to the invention, a transporting device for transporting trays to a tray sealing machine is provided, the transporting device comprising a control device, a first conveyor, a second conveyor downstream the first conveyor, a sliding region downstream the second conveyor and a pushing device arranged along the second conveyor and the sliding region and comprising at least two pushers extending transversally to a transport direction of the trays in the transporting device, wherein the control device is adapted to control, the first conveyor to move at a first speed, control the second conveyor to move at a second speed and control the pushing device so that the pushers move along the transport direction of the second conveyor and, in transport direction, a leading pusher restricts movement of a tray along at least a portion of the second conveyor and a trailing pusher moves the tray along at least a portion of the sliding region.

This transporting device allows for reliable alignment of the trays while not requiring intermittent driving of either the first or the second conveyor.

In one embodiment, the transporting device further comprises a common drive means for driving the pushing device and the second conveyor. This reduces the mechanical complexity of the transporting device.

Alternatively, the transporting device can comprise a first drive means for driving the pushing device and a second drive means for driving the second conveyor, the first drive means and the second drive means being independent from each other and wherein, optionally, trays can be transported in at least two lines transverse to a transport direction of trays in the transporting device. With this, the movement of the pushers of the pushing device can be controlled independent from the movement of the second conveyor, thereby also allowing for adjustment of the distance of the trays if need be.

In a further embodiment, the pushers are connected to a common drive chain. With this, the pushers can be driven simultaneously.

Though not explicitly discussed so far with respect to the transporting device, it is within the present disclosure that the above transporting device can be driven and controlled so as to realize any of the above embodiments pertaining to the method for controlling a transporting device for transporting trays to a tray sealing machine.

### Brief Description of the Drawings

- Fig. 1: shows an embodiment of a transporting device and a tray sealing machine;
- Fig. 2a-b: show side views of the transporting device according to different embodiments;
- Figs. 3a-d: show one embodiment of the movement of the trays in case the second speed is smaller than the first speed;
- Figs. 4a-d: show one embodiment of the movement in case the second speed is larger than the first speed;

### Detailed Description

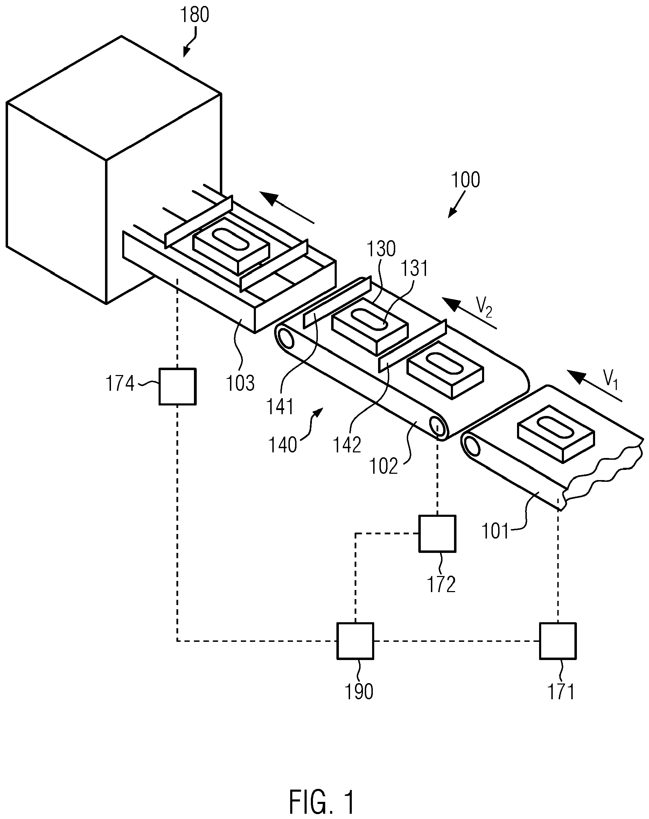

Fig. 1 shows a schematic depiction of a transporting device 100 for transporting trays 130 to a tray sealing machine 180 downstream of the transporting device 100.

The tray sealing machine 180 may be realized in any known way. Particularly, the tray sealing machine 180 may comprise one or more receptacles for receiving one tray 130 each. The tray sealing machine 180 may comprise a bottom part or support part in which the receptacles are provided and an upper part that can be moved relative to the bottom part so as to enclose a tray positioned within a receptacle. When the bottom part and top part are closed, a sealing of the one or more trays 130 within the respective receptacles can be facilitated by heating a sealing foil positioned above the trays 130 between the bottom part and the top part.

However, the invention is not limited with respect to how the tray sealing machine 180 is actually realized.

The trays may preferably be trays into which a product 131 (for example food or pieces of food and/or a paste or beverages or the like) has been introduced before being transported to the tray sealing machine 130. Preferably, the trays are either made from a plastic material or a metallic material or comprise the same and have at least a shape that is not determined by the forces of gravity. Particularly, the trays 130 may comprise a depression in which the product is placed.

The transporting device 100 comprises a first conveyor 101 that is adapted to convey trays 130 with a first speed V1 towards a second conveyor 102 downstream of the first conveyor 101. The second conveyor is adapted to transport the trays with a second speed V2 and to transfer the trays 130 to a sliding region 103 arranged downstream of the second conveyor 102 and upstream of the tray sealing machine 180. Within the sliding region 103, the trays are preferably not actively transported, but slide along the sliding region 103.

The first and/or the second conveyor 101 and 102 are preferably realized as endless conveyors, for example chain conveyors or conveyor belts.

The surface of the conveyors can comprise a plastic material and/or a metallic material, like stainless steel, so as to resist dirt and reduce the risk of growth of biological films.

If the first and/or the second conveyor are realized as a belt conveyor, the belt can be made from rubber or another plastic material, or it can comprise a plurality of interlinked belt elements that can be moved relative to each other so as to realize a substantially uninterrupted belt. Also other realizations are possible.

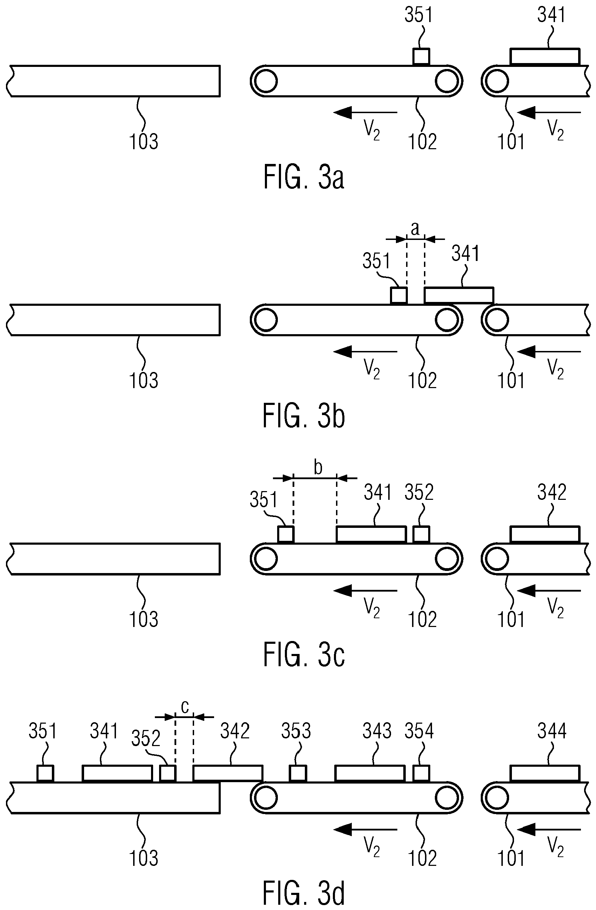

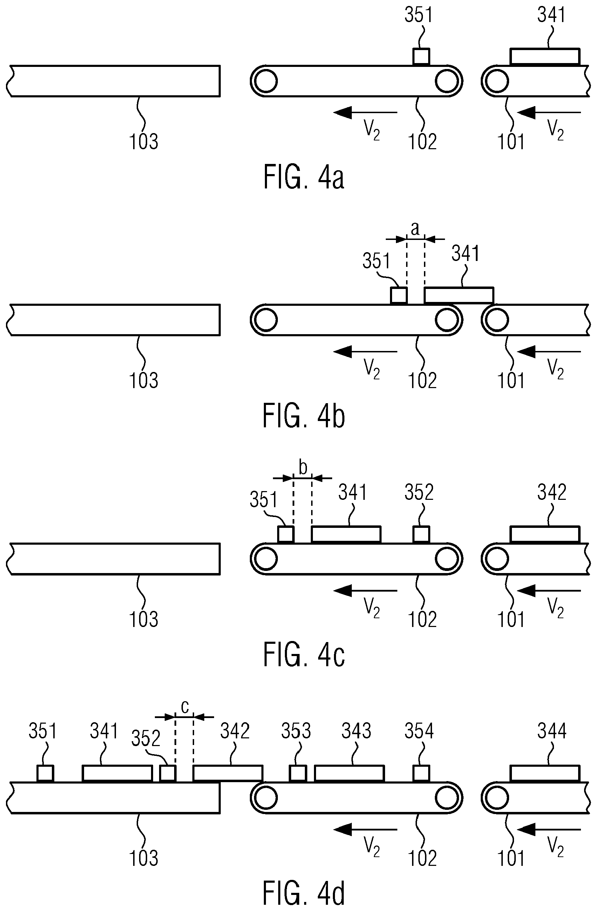

As will be explained further below, the velocities V1 of the first conveyor 101 and V2 of the second conveyor 102 can be equal to each other, but can also be different from each other. Additionally, as will be explained with respect to Figs. 3 and 4, the material of the first conveyor and the material of the second conveyor can have different friction coefficients with respect to the material of the trays. Particularly, the friction coefficient of the first conveyor 101 (or at least the surface of the first conveyor coming into contact with the trays) can be larger or smaller than the respective friction coefficient of the second conveyor 102 (or the part of the second conveyor that comes into contact with the trays 130).

The first conveyor 101 can be associated with a drive means 171 that drives the first conveyor 101. This drive means can, for example, be a servomotor or a chain drive or the like. The second conveyor 102 can likewise be associated with a drive means 172 for driving the second conveyor 102.

In addition, the transport device 100 comprises a pushing device 140, which comprises at least two pushers 141 and 142 that are spaced apart from each other in the transport direction of the trays. The pushing device 140, and particularly the pushers 141 and 142 of the pushing device, are arranged so that, in the transport direction of the trays, they can be moved beginning in the region where trays are transferred from the first conveyor 101 to the second conveyor 102 along the second conveyor 102 and along the sliding region 103 proximate to the surface of the second conveyor 102 and the sliding region 103 on which trays 130 are transported. Preferably, the pushers can be moved from the beginning of the second conveyor 102 (in the transport direction of the trays 130) to the end of the sliding region 103. Subsequently, the pushers can be moved back to the beginning of the second conveyor where, preferably, this movement is performed in a region where the pushers cannot get into contact with trays transported in both the second conveyor 102 and the sliding region 103. Particularly, the pushers 141 and 142 may be moved back in a plane that is vertically spaced apart from the transport plane of the trays 130 in the second conveyor 102 and the sliding region 103.

The pushing device can be associated with a drive means 174 for driving the pushing device and, particularly, the pushers 141 and 142. It can be provided that the pushing device and the second conveyor are driven by a common drive means, for example the drive means 172. Alternatively, the drive means 172 for driving the second conveyor 102 can be provided independent from the drive means 174 for driving the pushing device.

As shown in Fig. 1, a control unit 190 (for example a computer) can be provided that is connected to at least the drive means 172 and 174, and optionally also the drives means 171, so as to the control the movement of the second conveyor 102 and the pushing device 140, particularly the pushers 141 and 142 relative to the second conveyor 102, and optionally the movement of the first conveyor 101.

According to the invention, the pushers have a distance to each other that is larger than the extension of the trays in the transport direction of the trays along the second conveyor 102. A tray can thus be accommodated between two subsequent pushers 141 and 142.

Furthermore, the first conveyor 101 and the second conveyor 102, as well as the pushing device, are controlled so that trays transported in the first conveyor 101 and transferred to the second conveyor 102 are positioned between a first pusher 141 and a second pusher 142 so that the first pusher 141 (in the transport direction before the tray 130) acts a leading pusher, whereas the immediately following pusher 142 moves behind the tray 130 and acts as a trailing pusher.

Depending on the movement velocity of the tray 130, it will either not be in contact with any of the leading pusher and the trailing pusher within the second conveyor 102, or its movement in transport direction may be restricted by the leading pusher 141 and/or the trailing pusher 142 by means of the tray getting into physical contact with the pushers.

In any case, the leading pusher restricts the movement of the tray in the movement direction within the second conveyor 102 while the trailing pusher 142 moves the tray along at least a portion of the sliding region 103.

Thereby, it is ensured that the position at which the tray 130 is provided to the tray sealing machine is always the same, as it is determined by the movement of the second pusher irrespective of the actual position at which the tray was transferred from the first conveyor 101 to the second conveyor 102 with respect to the leading pusher 141 and the trailing pusher 142.

The pushers may particularly be realized as bars extending over the whole width of the second conveyor 102 and the sliding region 103, respectively, transverse to the transport direction of the trays 130 in the second conveyor 102 and the sliding region.

Preferably, the trays are transported in the first conveyor 101 and the second conveyor 102 in a way that each pusher 141 and 142 acts as a trailing pusher for a first tray (seen in the transport direction of the trays along the second conveyor) and (simultaneously) acts as a leading pusher for an immediately following tray. Thereby, the number of pushers for achieving reliable transport of the trays to the tray sealing machine 180 can be reduced.

This is achieved by transporting the trays in the first conveyor in a distance to each other that is at least larger than the extension of a pusher in transport direction of the trays but that is smaller than two times the distance of subsequent pushers minus two times the extension of a tray in transport direction.

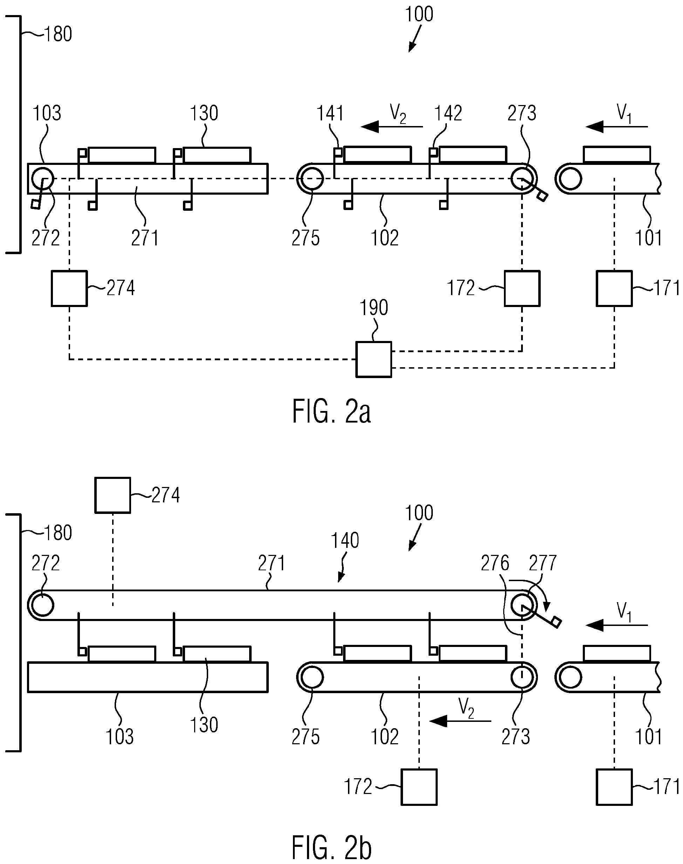

Figs. 2a and 2b show side views on the transporting device 100 and the pushing device 140.

In the embodiment of Fig. 2a, the first conveyor 101 and the second conveyor 102 are depicted. As shown here, the first conveyor is provided as an endless belt conveyor with turnaround points of the belt at positions 273 and 275. At the positions, deflection wheels may be provided that deflect the belt.

In this embodiment, the pushers 141 and 142 move above the transport plane of the trays 130 within the second conveyor 102 and the sliding region 103, and are deflected at the turnaround point 272 so as to move back to the beginning of the second conveyor 102 below the transport plane of the trays 130. This can be realized by providing a chain drive that is driven by the drive means 172 and controlled by the control device 190. As indicated previously, the drive means 172 can also be provided as part of the drive means 172 for driving the second conveyor 102. In such a case, it is preferable that the turnaround point for moving the pushers into the transport plane of the trays is the turnaround point 273 and allows for moving the pushers 141 and 142 from below the transport plane into the transport plane in a region between the first conveyor 101 and the second conveyor 102.

This is preferably done while no tray 130 is positioned in this region or transported in this region while a pusher 141 is moved from below the transport plane into the transport plane in this region.

In one embodiment, the pushers 141 and 142 are connected to a common drive chain 271 that may be connected to the drive means 172 for driving the second conveyor or a separate drive means 274. Thereby, the distance between the pushers is fixed and their movement can be adjusted simultaneously for all pushers 141 and 142.

An alternative embodiment is depicted in Fig. 2b. The realization of the first conveyor 101 and the second conveyor 102 and the sliding region 103, as well as associated drive means 171 and 172, is the same as described in Fig. 2a. In contrast to the embodiment of Fig. 2a, however, in the embodiment of Fig. 2b, the pushers 141 and 142 are connected to a transport chain 271 that is positioned above the transport plane of the trays 130 in the second conveyor 102 and the sliding region 103. In this embodiment, the arrangement of the transport mechanism 271 and the structure of the pushers is provided such that the pushers, when transported along the transport direction of the trays in the second conveyor 102 and the sliding region 103, extend into the transport plane of the trays 130 so as to potentially get into physical contact with the trays and act as leading/trailing pushers as described with respect to Fig. 1.

At the end of the sliding region 103, the pushers preferably reach a turnaround point 272 where their movement is deflected and they move backwards in a region where they do not get into contact with trays 130 transported in the transport plane. At the turnaround point 272, the pushers are then deflected so as to be positioned within the transport plane and move along with the trays. A drive means 274 can be associated with this transport mechanism and can either be the same or incorporated as the drive means 172 for driving the second conveyor 102 or it can be provided as a separate drive means 274.

It can also be provided that a gearing or other coupling 276 is provided between the transport mechanism 271 and the second conveyor 102 so as to translate a movement of the second conveyor into a movement of the pushers within the transport mechanism 271. This can be preferred in case there is no separate drive means 274 for driving the transport mechanism 271 of the pushing device 140.

While the embodiments of Figs. 2a and 2b show a movement of the pushers within the transport plane of the trays 130 and a backwards movement in a plane that is vertically spaced apart from this transport plane, it can also be provided that, at the end of the sliding region 103, the pushers are retracted and then deflected so as to be transported to the beginning of the second conveyor within the transport plane, but horizontally displaced. In such an embodiment, if the pushers are transported by a common chain, this chain can be arranged so as to move within the transport plane, but on either the left or the right side of the second conveyor and the sliding region, respectively (when seen in the direction of movement of the trays).

Though Figs. 1, 2a and 2b show the transport of trays in the first conveyor 101, the second conveyor 102 and the sliding region 103 one after the other, it can also be provided that trays 130 are transported in several lines in a direction perpendicular to the transport direction of the trays. In some embodiments, it can be provided that the trays transported in one group (i.e. the trays that are transported adjacent to each other in different lines perpendicular to the transport direction) are not actively aligned in the transport direction. This means that the time at which one tray of a group of trays is transferred from the first conveyor 101 to the second conveyor 102 may be different to the time a second tray is transferred from the first conveyor 101 to the second conveyor 102.

However, though active alignment may not be performed for trays within one group, it is preferred that the trays within one group are transported in the first conveyor 101 at a distance that is less than the difference between the distance of the pushers and the extension of the trays along the transport direction. Thereby, it is ensured that, even though the trays of one group are not perfectly aligned in the transport direction, they can be reliably transported and restricted with respect to their movement along the second conveyor and/or the sliding region by a leading and a trailing pusher, as explained above for the case where it is only provided for transport of trays one after the other in the first conveyor 101, the second conveyor 102 and the sliding region 103.

Figs. 3a-3d show an embodiment where the speed V2 of the second conveyor 102 is smaller than the speed V1 of the first conveyor.

In Fig. 3a, the situation where a tray 341 is transported in the first conveyor towards the second conveyor 102 is shown. A leading pusher 351 already moves along the transport direction of the trays in the transport plane of the second conveyor.

In Fig. 3b, the tray 341 is transferred from the first conveyor 101 to the second conveyor 102 while both conveyors continue their movement. The leading pusher 351 has also moved (compared to Fig. 3a) along the transport direction and the leading edge of the tray 341 has a distance to the leading pusher 351 denoted with a.

In Fig. 3c, time has proceeded and the first tray is now fully transported by the second conveyor 102. In this situation, the leading edge of the tray 341 has a distance b to the leading pusher 351 which depends on the movement velocity of the pushers of the pushing device. If the pushers move faster than the speed V2, the distance b is larger than the distance a. If the pushers move slower than the speed V2, the distance b will be smaller than the distance a.

As is shown in Fig. 3c, a trailing pusher 352 has now been moved into the transport plane of the second conveyor 102 before a subsequent (second) tray 342 is transferred from the first conveyor 101 to the second conveyor 102.

In Fig. 3d, time has further proceeded and the first tray 341 has now been moved from the second conveyor to the sliding region 103 where it is no longer actively moved by the sliding region, but, if at all, is actively moved by the trailing pusher 352 with which the tray 341 comes into physical contact along its movement within the sliding region. This is due to the tray 341 being decelerated in the sliding region because of friction.

A subsequent tray 342 is moved from the second conveyor 102 in the depiction in Fig. 3d to the sliding region 103 where the second tray 342 has a distance c to the leading pusher 352 while it is not in physical contact with the trailing pusher 353.

The distance c may be different to the size b discussed in relation to Fig. 3c and may be a consequence of imperfect alignment of trays 341 and 342 while being transported in the first conveyor 101. When the distance between subsequent trays 341 and 342 varies, the distance to the leading and trailing pushers, respectively, in the second conveyor 102 and/or in the sliding region 103 may likewise vary.

However, due to the deceleration of trays transported in the sliding region until they come into physical contact with their associated trailing pusher, these differences are reliably compensated so that, at least at the end of the sliding region 103, each tray is in physical contact with its associated trailing pusher 352.

This can also be influenced by the relative speed of the pushers and the second conveyor. If the pushers move at a speed that is smaller than the speed of the second conveyor, a tray will likely get into contact with its leading pusher while being transported along the second conveyor 102. This causes an alignment of the trays in the transport direction because the leading pushers restrict the movement of the trays in this direction. After transfer to the sliding region 103, the trays are then decelerated due to friction. If the size of the sliding region is set appropriately, this will result in a tray that was in physical contact with its associated leading pusher being, at least at the end of the sliding region 103, in physical contact with the trailing pusher 352. A tray that was, while being transported in the second conveyor 102, not in physical contact with the leading pusher 351 (i.e. was closer to the trailing pusher already) will get into contact with the trailing pusher 352 earlier compared to the just described tray. Thus, it is ensured that any tray, irrespective of their relative position to the leading pusher and the trailing pusher, will be in physical contact with the trailing pusher at least at the end of the sliding region 103.

The embodiment discussed in relation to Figs. 3a-3d can be preferred in case a friction coefficient of the second conveyor 102 is smaller compared to the friction coefficient of the first conveyor 101 with respect to the material of the trays.

Figs. 4a-4d show an alternative embodiment where the speed V1 of the first conveyor 101 is smaller than the speed V2 of the second conveyor 102. This embodiment is particularly preferred in case the friction coefficient of the second conveyor is larger than the friction coefficient of the first conveyor with respect to the material of the trays 341. With this arrangement, slip can be avoided because the second conveyor causes more force on the trays due to its larger speed and higher friction coefficient.

As for the embodiment discussed in relation to Figs. 3a-3d, a tray 341 is first transported from the first conveyor 101 to the second conveyor 102 where a leading pusher 351 moves in the transport direction before this tray (Fig. 4b). Depending on the speed of the pusher 351 and the speed, as well as the position of the tray 341 in the first conveyor and the second conveyor, the leading edge of the tray 341 may have a distance a to the pusher 351.

While the tray 341 is then transported in the second conveyor (see Fig. 4b and c), a trailing pusher is moved into the transport plane so that the tray 341 is positioned between the leading pusher 351 and the trailing pusher 352. Again, depending on the speed V2 and the speed of the pushers, the leading edge of the tray 341 may have a distance b that is different from the distance a in Fig. 3b to the leading pusher 351.

In Fig. 4d, a situation similar to the situation in Fig. 3d is then obtained where, at least in one section of the sliding region 103, the trailing pusher 352 is in contact with the trailing edge of the tray 341 to the thereby actively transport the tray in the sliding region at a defined position.

While, in the context of the embodiments of Figs. 3 and 4, it was assumed that the pushers all move with the same velocity, it can also be provided that the pushers are moved with different speeds where the speed of the pushers is intermittently changed from a third speed to a fourth speed. This can be realized by either providing separate drive mechanisms for driving the pushers in the second conveyor 102 and in the sliding region 103, respectively, or by altering the transport velocity caused by a common drive means, as described, for example, in relation to Figs. 1 and 2.

For example, while the pushers move along the second conveyor 102, it can be provided that the speed of the pushers (for example a third speed) is smaller than the second speed V2 of the second conveyor 102. Thereby, a tray transported in the second conveyor 102 is moved towards the leading pusher and will come into contact with this leading pusher depending on the length of the second conveyor and the initial distance a of the leading edge of the tray to the leading pusher.

In the area of the sliding region 103, the pushers can then be moved at a fourth speed that may be larger than the second speed V2 or at least larger than the third speed so as to reduce the distance of a trailing pusher to the tray and ensure physical contact of the trailing pusher with the tray. By varying the velocity of the pushers, restriction of movement of the trays and proper positioning of the trays before transferring them to the tray sealing machine can also be achieved over comparably short distances. Particularly, the larger the difference of the third speed and the fourth speed is with respect to the second speed, the shorter the second conveyor and the sliding region 103 can be realized.

## Claims

1. A method for controlling a transporting device (100) for transporting trays (130) to a tray sealing machine (180), the transporting device (100) comprising a control device (190), a first conveyor (101), a second conveyor (102) downstream the first conveyor (101), a sliding region (103) downstream the second conveyor (102) and a pushing device (140) arranged along the second conveyor (102) and the sliding region (103) and comprising at least two pushers (141, 142) extending transversally to a transport direction of the trays (130) in the transporting device (100), wherein the method comprises controlling, by a control device (190) of the transport device (100), the first conveyor (101) to move at a first speed (V1), controlling the second conveyor (102) to move at a second speed (V2) and controlling the pushing device (140) so that the pushers (141, 142) move along the transport direction of the second conveyor (102) and, in transport direction, a leading pusher (141) restricts movement of a tray (130) along at least a portion of the second conveyor (102) and a trailing pusher (142) moves the tray along at least a portion of the sliding region (103).

2. The method according to claim 1, wherein the second speed (V2) is smaller than the first speed (V1) and, optionally, a friction coefficient of the second conveyor (102) with respect to the trays (130) is smaller than a friction coefficient of the first conveyor (101) with respect to the trays (130); or
wherein the second speed (V2) is larger than the first speed (V1) and, optionally, a friction coefficient of the second conveyor (102) with respect to the trays (130) is larger than a friction coefficient of the first conveyor (101) with respect to the trays (130).

3. The method according to claim 1 or 2, wherein the pushing device (140) and the second conveyor (102) are driven by a common drive means (172).

4. The method according to claim 1 or 2, wherein the pushing device (140) is driven by a first drive means (174) and the second conveyor (102) is driven by a second drive means (172) independent from the first drive means (174).

5. The method according to claim 4, wherein the control device (190) controls the first drive means (174) so that a speed of the pushers (140) intermittently changes from a third speed to a fourth speed, wherein, optionally, the third speed and/or the fourth speed is smaller than the second speed (V2).

6. The method according to any of claims 1 to 5, wherein the pushing device (140) is controlled by the control device (190) so that a speed of the pushers (141, 142) is equal to the second speed (V2) or wherein the speed of the pushers (141, 142) is smaller than the first speed (V1) and different from the second speed (V2).

7. The method according to any of claims 1 to 6, wherein a pushers (141, 142) acts as a trailing pusher for a first tray and as a leading pusher of a subsequent tray.

8. The method according to any of claims 1 to 7, wherein trays (130) are transported in at least two lines transverse to a transport direction of the trays (130) in the transporting device (100).

9. The method according to claim 8, wherein the trays (130) are transported in the first conveyor (101) in subsequent, spaced apart groups, wherein trays within a group are not actively aligned in a direction transverse to the transport direction of the trays (130) in the first conveyor (101).

10. The method according to claim 9, wherein a distance between subsequent groups of trays transported in the first conveyor is smaller than the difference between two times a distance of two subsequent pushers (141, 142) and two times the extension of a tray (130) in transport direction.

11. The method according to any of claims 1 to 10, wherein the pushers (141, 142) are connected to a common drive chain (271).

12. A transporting device (100) for transporting trays (130) to a tray sealing machine (180), the transporting device (100) comprising a control device (190), a first conveyor (101), a second conveyor (102) downstream the first conveyor (101), a sliding region (103) downstream the second conveyor (102) and a pushing device (140) arranged along the second conveyor (102) and the sliding region (103) and comprising at least two pushers (141, 142) extending transversally to a transport direction of the trays (130) in the transporting device (100), wherein the control device (190) is adapted to control, the first conveyor (101) to move at a first speed (V1), control the second conveyor (102) to move at a second speed (V2) and control the pushing device (140) so that the pushers (141, 142) move along the transport direction of the second conveyor (102) and, in transport direction, a leading pusher (141) restricts movement of a tray (130) along at least a portion of the second conveyor (102) and a trailing pusher (142) moves the tray along at least a portion of the sliding region (103).

13. The transporting device (100) according to claim 12, further comprising a common drive means (172) for driving the pushing device (140) and the second conveyor (102).

14. The transporting device (100) according to claim 12, further comprising a first drive means (174) for driving the pushing device (140) and a second drive means (172) for driving the second conveyor (102), the first drive means (174) and the second drive means (172) being independent from each other and wherein, optionally, trays (130) can be transported in at least two lines transverse to a transport direction of trays in the transporting device (100).

15. The transporting device (100) according to any of claims 12 to 14, wherein the pushers (141, 142) are connected to a common drive chain (271).
